# EUROPEAN PATENT SPECIFICATION

(11) **EP 3 372 289 B1**
(45) Date of publication and mention of the grant of the patent: **29.04.2020**
(21) Application number: 18150741.9
(22) Date of filing: 09.01.2018
(51) Int. Cl.: A63F 13/25, A63F 13/211, A63F 13/213, A63F 13/5255, A63F 13/212

(54) **METHOD SUITABLE FOR A HEAD MOUNTED DISPLAY DEVICE AND VIRTUAL REALITY SYSTEM**
VERFAHREN FÜR HEAD-MOUNTED DISPLAY VORRICHTUNG UND SYSTEM FÜR VIRTUELLE REALITÄT
PROCÉDÉ APPROPRIÉ POUR UN VISIOCASQUE ET UN SYSTÈME DE RÉALITÉ VIRTUELLE

(30) Priority: 07.03.2017 US 201715451421
(43) Date of publication of application: 12.09.2018
(73) Proprietor: HTC Corporation, Taoyuan City 330, (TW)
(72) Inventor: Pan, Sheng-Yang, 330 Taoyuan City (TW)
(74) Representative: Murgitroyd & Company

(56) References cited:
- WO-A1-2014/108675
- WO-A1-2015/123768
- JP-A- 2016 541 035
- Jonathan Ravasz: "Design Practices in Virtual Reality - uxdesign.cc - User Experience Design", , 5 February 2017 (2017-02-05), XP055484957, Retrieved from the Internet: URL:https://web.archive.org/web/2017020513 4023/https://uxdesign.cc/design-practices- in-virtual-reality-f900f5935826 [retrieved on 2018-06-15]

## Description

### BACKGROUND

### Field of Invention

The present invention relates to a method suitable for a head mounted device and virtual reality system. More particularly, the present invention relates to a method suitable for a head mounted device and virtual reality system by adjusting the virtual reality content to prevent a cable from tangling.

### Description of Related Art

In a game or an interactive content of a virtual reality system, the cables are easily tangling when the player (or user) walks or moves. The cables uses for transmitting signals between the controller (e.g., hand controller devices or head mounted device) and the host. The tangled cables may make player fall down or tie up the body. Thus, the tangled cables may cause dangerous issue or inconvenient issue when the player operates the virtual reality system.

Besides, the cables also limit the interactive region of a lot of games. For example, some interactive games are limited to interactive with the player only in the 180-degree front-side corresponding to the center of virtual reality content, so as to avoid the cable tangling issue. However, the traditional solutions limit the interactive regions. It may impact the interestingness of the game content. As such, the solution cannot provide a better user experience for the player. WO 2014/108675 may be useful for understanding the related art.

Therefore, how to provide a method for preventing a cable from tangling in a virtual reality system and providing the better user experience in the same time becomes a problem to be solved.

### SUMMARY

It is an object of the present invention to provide a method and virtual reality system to avoid tangling. This object can be achieved by the features as defined by the independent claims. Further enhancements are characterized by the dependent claims. One aspect of the present disclosure is related to a method suitable for a head mounted device. The method includes: sensing a rotational data of the head mounted device; generating a tangling prediction according to a continuous degree of the rotational data; determining a cable tangling parameter according to the tangling prediction; determining that whether a cable is going to tangle according to the cable tangling parameter; and adjusting a virtual reality content when the cable is going to tangle. Another aspect of the present disclosure is related to a virtual reality system. In accordance with one embodiment of the present disclosure, the virtual reality system includes: a head mounted device and a control device. The head mounted device is configured to sense a rotational data and transmit the rotational data by a cable. And, the host device is configured to receive the rotational data by the cable and generate a tangling prediction according to a continuous degree of the rotational data, determine a cable tangling parameter according to the tangling prediction, determine that whether the cable is going to tangle according to the cable tangling parameter, and adjust a virtual reality content when the cable is going to tangle.

Through the method suitable for a head mounted device and virtual reality system described above, the user will not be interrupted by the tangled cable issue while interacting with the virtual reality content. The virtual reality system can dynamically adjust the virtual reality content when the cable is tangled according to the cable tangling parameter. It helps the user move to the appropriate direction, so as to avoid the user tangling by or stumbling over the cable. Therefore, the method for preventing the cable from tangling and the virtual reality system also provides a better user experience.
Patent documents WO2014/108675A1 and JP2016/541035A show a method for predicting tangling of a cable around a user of a virtual reality system, where a cable rotation angle is measured and compared to a threshold value. In the case of cable tangling, a warning message is displayed.
Jonathan Ravasz discusses in "Design Practices in Virtual Reality - uxdesign.cc - User Experience Design" (https://web.archive.org/web/20170205134023/https://uxdesign.cc/ design-practices-in-virtual-reality-f900f5935826) design rules for the creation of virtual reality content. He shows that it is known to place objects in virtual reality content strategically to guide the user.

### BRIEF DESCRIPTION OF THE DRAWINGS

Figs. 1A-1B are schematic diagrams of a virtual reality system according to an exemplary embodiment of the present invention.
Figs. 2A-2D are schematic diagrams of a method for preventing a cable from tangling according to an exemplary embodiment of the present invention.
Fig. 3 is a flowchart of a method for preventing a cable from tangling according to an exemplary embodiment of the present invention.

### DETAILED DESCRIPTION

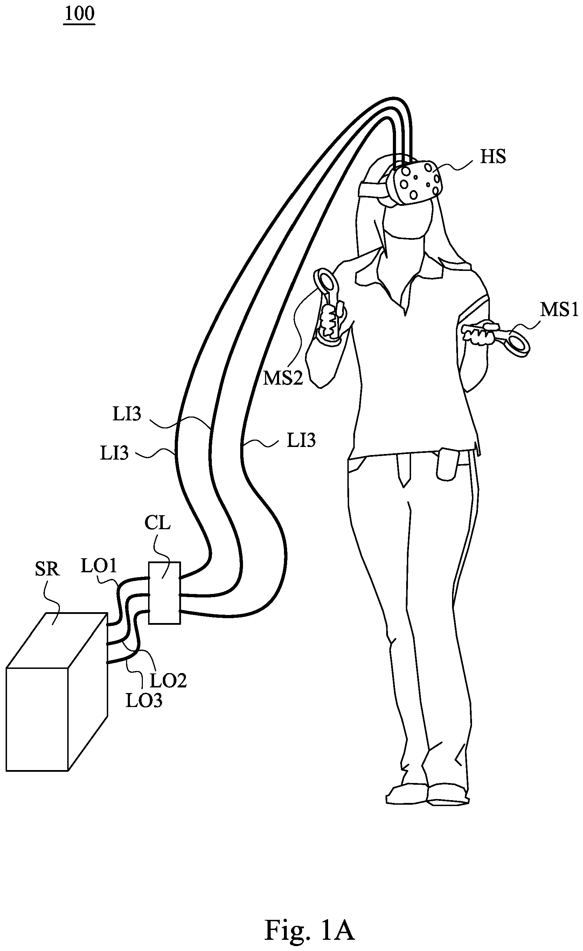

Reference is made to Fig. 1A, Fig. 1A is a schematic diagram of a virtual reality system 100 according to an exemplary embodiment of the present invention. As shown in Fig. 1A, the virtual reality system 100 includes: a head mounted device HS and a host device SR. In one embodiment, the virtual reality system 100 further includes at least one motion-sensitive device (e.g., motion-sensitive device MS1, MS2).

In one embodiment, the head mounted device HS is operative for providing immersive virtual reality for the wearer (or the player). In one embodiment, the player wears the head mounted device HS on his/her head to see the virtual reality content. The head mounted device HS is widely used with computer games and also used in some applications, such as simulators and trainers. In some embodiment, the head mounted device HS includes a stereoscopic head-mounted display to provide separate images for each eye, a stereo sound component and/or head motion tracking sensors. In some embodiment, the head motion tracking sensors include gravity-sensors), accelerometer(s) and/or structured light system(s), etc. In some embodiment, the head mounted device HS also has eye-tracking sensors and gaming controllers.

In one embodiment, the control device CL is connected to the head mounted device HS by at least one cable (e.g., cables LI1, LI2 and/or LI3). In one embodiment, the cable LI1 can be realized by a HDMI (High-Definition Multimedia Interface) cable for transmitting the information related to the multimedia. In one embodiment, the cable LI2 can be realized by a USB cable for transmitting the signal and/or data between the control device CL and head mounted device HS. In one embodiment, the cable LI3 can be realized by a power cable.

In one embodiment, the formats of the information (or the signal) separately transmitted from the head mounted device HS and the host device SR may be different, and the control device CL can be realized by a communication bridge for transforming and/or transmitting the information or signal between the head mounted device HS and the host device SR.

On the other hand, the control device CL is connected to the host device SR by at least one cable (e.g., cables LO1, LO2 and/or LO3). In one embodiment, the cable L01 can be realized by a HDMI (High-Definition Multimedia Interface) cable for transmitting the information related to the multimedia. In one embodiment, the cable LO2 can be a USB cable for transmitting the signal and/or data between the control device CL and head mounted device HS. In one embodiment, the cable LO3 can be can be a power cable.

In one embodiment, the host device SR can be implemented by a computer, a server and/or other device having calculation function. The host device SR is operative for storing the virtual reality content (e.g. game data), calculating the player's movement or position, and generating the virtual reality images corresponding to the player's movement or position.

In one embodiment, the head mounted device directly connects to the host device SR by one or more cable. In one embodiment, the head mounted device HS can directly connect to the host device SR by at least one cable, without using the control device CL. In one embodiment, the host device SR translates the received information to the readable format of itself.

In one embodiment, player (or user) holds the motion-sensitive devices MS1, MS2. And, the motion-sensitive devices MS1, MS2 enable the player to interact with the virtual reality content (e.g., the digital landscape). In some embodiment, the motion-sensitive devices MS1, MS2 transmits the motion information or signal to the host device SR by wire or wireless connection.

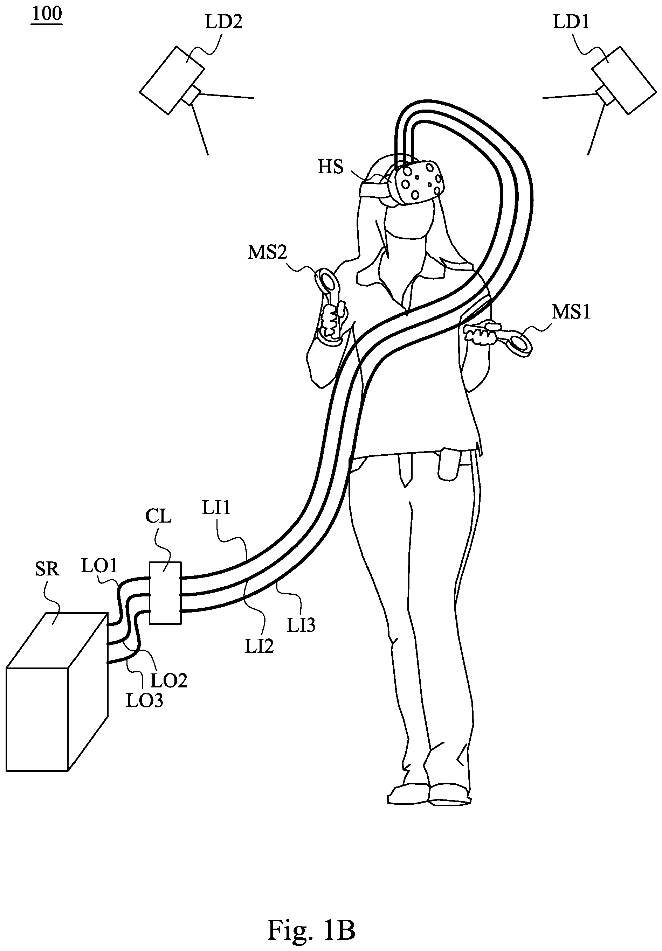

Reference is made to Fig. 1B, Fig. 1B is a schematic diagram of a virtual reality system 100 according to an exemplary embodiment of the present invention. As shown in Fig. 1B, the cables LI1-LI3 tangle the player's body when the current rotation angle of the player exceeds a tangling threshold (e.g., 360-degree or 720-degree). In one embodiment, the current rotation angle is detected in accordance with the rotation of the player's head while the user wears the head mounted device HS. For example, when the user swings of the body, walking around or turning around to different directions or other body motions. For avoiding this situation, the invention provides a method for preventing a cable from tangling. The method is described as following content.

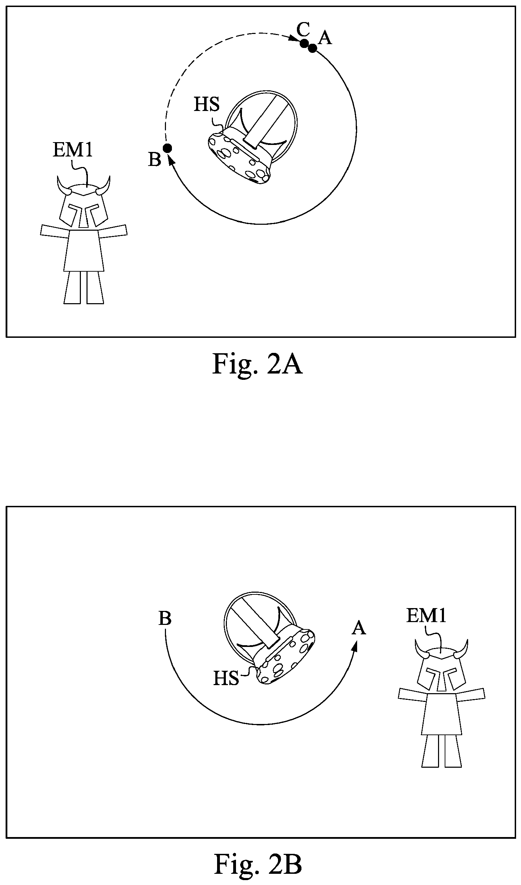

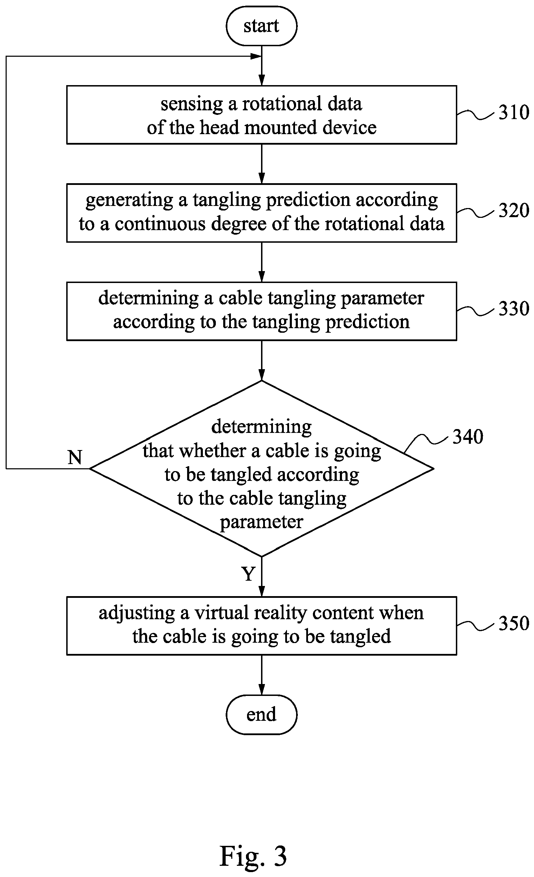

Reference is made to Figs. 2A-2D and 3, Figs. 2A-2D are schematic diagrams of a method for preventing a cable from tangling according to an exemplary embodiment of the present invention. Fig. 3 is a flowchart of a method for preventing a cable from tangling according to one embodiment of the present invention. In one embodiment, the head mounted device HS is configured to couple to a first terminal of at least one first cable (for example, the first cable can be cable(s) LI1, LI2 and/or LI3). And, the control device CL is configured to couple to a second terminal of the at least one first cable. In addition, the host device SR is coupled to the control device CL by at least one second cable (e.g., cable(s) L01, LO2 and/or LO3).

In step 310, the head mounted device HS senses a rotational data and transmits the rotational data by a cable (e.g., at least one of the cable LI1, LI2, LI3, LO1, LO2 and LO3).

In one embodiment, as shown in Fig. 1B, the virtual reality system 100 further includes at least one lighthouse (e.g., lighthouses LD1 and/or LD2). In one embodiment, the lighthouses LD1 and LD2 can be implemented by the laser devices.

In one embodiment, the at least one lighthouse (e.g., lighthouse LD1 and/or LD2) keeps projecting the laser according to a fixed frequency. When the laser hits or touches the head mounted device HS, at least one sensor (e.g. one or more light sensor) on the head mounted device HS detects the laser. And then, the head mounted device HS transmits the data related to which sensor(s) is/are hit by the laser or the time point(s) of sensor(s) is/are hit by the laser to the host device SR. The data herein is defined as rotational data. In one embodiment, the rotational data represents the rotation degree, the position and/or the rotation direction of the head mounted device HS. Thus, in the following steps, the host device SR calculates the rotation or the position of the head mounted device HS according to the rotational data.

It should be noticed that the cable can be implemented by at least one of the cable LI1, LI2, LI3, LO1, LO2 and LO3 in some embodiment. In other words, the person skilled in the art can easily understand that the cable in present invention can be implemented (or interpreted) as, e.g., cables LI1, cables LI1 and LI2, cables L01, LI3 and LI3..., or other combination.

In step 320, the host device SR generates a tangling prediction according to a continuous degree of the rotational data.

In one embodiment, the host device SR calculates (or predict) the rotation or the position of the head mounted device HS according to the rotational data. When the rotational data represents the head mounted device HS continuously rotates to the same direction (e.g., the head mounted device HS keeps rotating clockwisely), the host device SR generates the tangling prediction according to the continuous degree of the rotational data. And, the tangling prediction represents the predicted rotation direction of the head mounted device HS (e.g., the tangling prediction represents that the head mounted device HS will continuously turn in clockwise).

In step 330, the host device SR determines a cable tangling parameter according to the tangling prediction.

In one embodiment, the host device SR further determines a current rotation angle of the cable according to the cable tangling parameter.

For example, when the tangling prediction represents that head mounted device HS is going to clockwisely rotate into the second turn, the host device SR determines the cable tangling parameter as 2. For another example, when the tangling prediction represents that head mounted device HS is going to clockwisely rotate into the third turn, the host device SR determines the cable tangling parameter as 3.

In one embodiment, the host device SR determines a current rotation angle of the cable according to the cable tangling parameter.

In some embodiment, the host device SR analyzes the current rotation angle also represents a clockwise angle or a counterclockwise angle according to the tangling prediction.

For example, when the cable tangling parameter is two, the current rotation angle of the cable is determined as 720-degree in clockwise. For another example, when the cable tangling parameter is 3, the current rotation angle of the cable is determined as 1080-degree in counterclockwise.

In one embodiment, the current rotation angle is proportional to the cable tangling parameter. For example, the current rotation angle is 360-degree in clockwise when the cable tangling parameter is 1. For another example, the current rotation angle is 540-degree when cable tangling parameter is 1.5.

In one embodiment, the current rotation angle also can be obtained according to the room setup information. The room setup information comprises an operation space data. The operation space data, which is set by the user, is configured for setting up a virtual reality operation space. And, the host device SR analyzes the data received from the head mounted device HS to obtain a location information. By the location information, the room setup information and/or the current rotation angle of the cables, the host device SR precisely calculates the cable tangling parameter.

In one embodiment, the host device SR analyzes the rotational data (which may comprise the information of the rotation degree, the position and/or the rotation direction of the head mounted device HS) received from the head mounted device HS, so as to obtain the cable tangling parameter.

In another embodiment, the host device SR predicts the cable tangling parameter according to the rotational data detected by the head mounted device HS.

In one embodiment, the head mounted device HS includes a gravity-sensor and/or a light sensor. The gravity-sensor and/or a light sensor senses a head direction or a head rotation during an operation period, for example, the gravity-sensor and/or a light sensor detects the head direction or head rotation of each time point (e.g., every 10 microseconds detects once) for sensing the rotational data, so as to calculate the continuous degree of the rotational data for generating the cable tangling parameter.

As such, the host device SR further calculates the cable tangling parameter according to the head direction or head rotation detected by the gravity-sensor and/or a light sensor of the head mounted device HS.

In one embodiment, the current rotation angle is defined according to a rotated degree or a rotated variation corresponding to the initial position of the head mounted device HS.

In step 340, the host device SR determines that whether a cable (e.g., at least one of the cable LI1, LI2, LI3, LO1, LO2 and LO3) is going to tangle according to the cable tangling parameter.

In one embodiment, the host device SR determines that whether the at least one first cable or the at least one second is going to tangle according to the cable tangling parameter. If the host device SR determines that the at least one first cable or the at least one second is going to tangle according to the cable tangling parameter, the step 350 is performed. If the host device SR determines that the at least one first cable or the at least one second is not going to tangle according to the cable tangling parameter, the procedure goes back to step 310.

In one embodiment, the host device SR determines that the cable is going to tangle when the cable tangling parameter is higher than a tangling threshold.

For example, the host device SR determines that the first cable is going to tangle when the cable tangling parameter of the first cable (e.g., cable LI1) is 2 and the tangling threshold is predetermined as 1.5.

For example, the host device SR determines that the first cable is going to tangle when the cable tangling parameter of the first cable (e.g., cables LI1) and second cable (e.g., cables LI2) is 1.75 and the tangling threshold is predetermined as 1.5.

For another example, the host device SR determines that the first cable is not going to tangle when the cable tangling parameter of the first cable (e.g., cable LI1) is 0.5 and the tangling threshold is predetermined as 1.5.

In some embodiment, the host device SR predicts that whether the at least one first cable or the at least one second will tangle by recording and analyzing the rotational data of the head mounted device HS.

In some embodiment, the host device SR predicts that whether the at least one first cable or the at least one second will tangle according to the prediction algorithm or the total the movement variance of the head mounted device HS. The prediction algorithm can be realized by an existed algorithm. Therefore, it is no more described herein.

In step 350, the host device SR adjusts a virtual reality content when the cable (e.g., at least one of the cable LI1, LI2, LI3, LO1, LO2 and LO3) is going to tangle.

In one embodiment, the host device SR adjusts a virtual reality content when the at least one first cable or the at least one second cable is going to tangle. Figs. 2A-2D represents the virtual reality content seen by the player when the player wears the head mounted device HS. In one embodiment, virtual reality content is provided by the host device SR through the cables (e.g. cables LI1 and LO1) and the control device CL. The virtual reality content of Figs. 2A-2D are shown by the stereoscopic head-mounted display in the head mounted device HS.

In one embodiment, as shown in Fig. 2A, the player's head moves from point A to point B along the arrows for trancing an interest point EM1 (e.g., the virtual enemy). The current rotation angle is generated by rotating the head mounted device HS from point A to point B. And, the host device SR determines (or predicts) that the at least one first cable or the at least one second cable is going to tangle if the head mounted device HS keeps rotating from point B to point C. Therefore, the following embodiments provide the method for prevents the cable from tangling. However, the invention is not limited by the examples as Figs. 2A-2D.

In one embodiment, the host device SR dynamically adjusts the virtual reality content according to a current rotation angle and provides a user interface or a virtual reality image by the stereoscopic head-mounted display in the head mounted device HS after adjusting the virtual reality content.

In one embodiment, an interest point EM1 (e.g., the virtual enemy followed by the player) in the virtual reality content is moved to an opposite direction (e.g. from point B to point A shown in Fig. 2B) relative to the current rotation angle (e.g. from point A to point B shown in Fig. 2A) when the first cable or the second cable is going to tangle. For example, as shown in Fig. 2B, the interest point EM1 moves from point B to point A. As such, the player will be attracted by the interest point EM1 to move from point B to point A along the arrows. Also, it avoids the player's head keeps rotating from an arc direction from the point B to point C. In this way, the at least one first cable or the at least one second cable rotates in the opposite direction relative to the current rotation angle. Therefore, it prevents the at least one first cable or the at least one second cable from tangling.

In one embodiment, the interest point EM1 in the virtual reality content is moved clockwisely when the current rotation angle represents a counterclockwise angle.

In one embodiment, the interest point EM1 in the virtual reality content is moved counterclockwisely when the current rotation angle represents a clockwise angle.

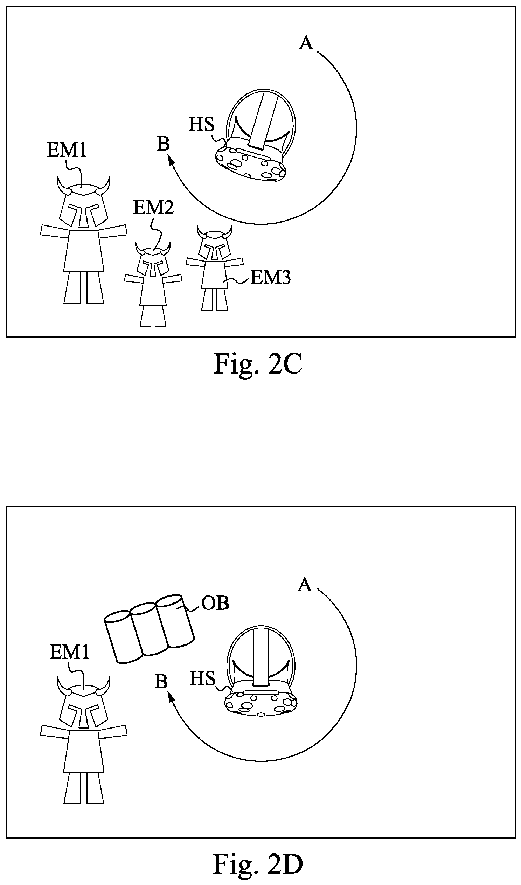

In one embodiment, as shown in Fig. 2C, at least one new object (e.g., new object EM2, EM3) of the virtual reality content is generated in an opposite direction relative to the current rotation angle when the at least one first cable or the at least one second cable is going to tangle. As such, the gaze of the player will focus on the new objects EM2, EM3 (e.g., the new object EM2, EM3 can be implemented as new virtual enemies) to move from point B to point A along the arrows for tracing the new objects EM2, EM3. In this way, the at least one first cable or the at least one second cable may rotate in the opposite direction (e.g. from point B to point A shown in Fig. 2C) relative to the current rotation angle (e.g. from point A to point B shown in Fig. 2A). Furthermore, the new objects EM2, EM3 are not limited to on the horizontal line. For example, the user's view of new object EM2 is higher than the user's view of the interest point EM1, and the user's view of new object EM3 is lower than the user's view of the interest point EM1. Therefore, it prevents the at least one first cable or the at least one second cable from tangling.

In one embodiment, as shown in Fig. 2D, an obstacle object OB of the virtual reality content is generated according to the current rotation angle when the at least one first cable or the at least one second cable is going to tangle. In this way, the player's head will stop rotating from point A to point B along the arrows of the arc direction because the obstacle object OB is blocked the user's view. Therefore, it prevents the at least one first cable or the at least one second cable from keeping tangling.

Based on above embodiments, by adjusting the artificial intelligence and/or the procedure of the game (or the content) can help to prevent the at least one first cable or the at least one second cable from tangling.

Through the method suitable for a head mounted device and virtual reality system described above, the user will not be interrupted by the tangled cable issue while interacting with the virtual reality content. The virtual reality system can dynamically adjust the virtual reality content when the cable is going to tangle according to the cable tangling parameter. It helps the user move to the appropriate direction, so as to avoid the user tangling by or stumbling over the cable. Therefore, the method for preventing the cable from tangling and the virtual reality system also provides a better user experience.

## Claims

1. A method, suitable for a head mounted device, comprising:
sensing (310), by the head mounted device, a rotational data of the head mounted device, the head mounted device displaying a virtual reality content for a wearer;
generating (320), by a host device, a tangling prediction according to a continuous degree of the rotational data;
determining (330), by the host device, a cable tangling parameter according to the tangling prediction;
determining a current rotation angle of the cable according to the cable tangling parameter, wherein the current rotation angle of the cable is a rotation of the head mounted device according to the rotational data;
determining (340), by the host device, that whether a cable is going to tangle according to the cable tangling parameter;
wherein the cable is going to tangle when the cable tangling parameter is higher than a tangling threshold;
adjusting (350), by the host device, the virtual reality content when the cable is going to tangle;
**characterised by**
adjusting, by the host device, dynamically the virtual reality content according to the current rotation angle by moving an interest point in the virtual reality content to an opposite direction relative to the current rotation angle when the cable is going to tangle; and
providing, by the head mounted device, a user interface or a virtual reality image after adjusting the virtual reality content.

2. The method of claim 1, wherein a new object of the virtual reality content is generated in an opposite direction relative to the current rotation angle when the cable is going to tangle.

3. The method of claim 1, wherein an obstacle object of the virtual reality content is generated according to the current rotation angle when the cable is going to tangle.

4. The method of claim 1, wherein the interest point in the virtual reality content is moved clockwisely when the current rotation angle represents a counterclockwise angle.

5. The method of claim 1, wherein the interest point in the virtual reality content is moved counterclockwisely when the current rotation angle represents a clockwise angle.

6. The method of claim 1, wherein the method further comprising:
sensing the rotational data by a head motion tracking sensor of the head mounted device during an operation period, so as to calculate the continuous degree of the rotational data for generating the cable tangling parameter.

7. The method of claim 1, wherein the cable is coupled to the head mounted device and a control device.

8. A virtual reality system, comprising:
a head mounted device configured to sense a rotational data and transmit the rotational data by a cable, the head mounted device being configured to display a virtual reality content for a wearer;
a host device is configured to
receive the rotational data by the cable and generate a tangling prediction according to a continuous degree of the rotational data,
determine a cable tangling parameter according to the tangling prediction,
determine a current rotation angle of the cable according to the cable tangling parameter, wherein the current rotation angle of the cable is a rotation of the head mounted device according to the rotational data;
determine that whether the cable is going to tangle according to the cable tangling parameter, wherein the host device is further configured to determine the cable is going to tangle when the cable tangling parameter is higher than a tangling threshold, and adjust the virtual reality content when the cable is going to tangle;
**characterised in that**
the host device adjusts dynamically the virtual reality content according to the current rotation angle by moving an interest point in the virtual reality content to an opposite direction relative to the current rotation angle when the cable is going to tangle.

9. The virtual reality system of claim 8, further comprising: a new object of the virtual reality content is generated in an opposite direction relative to the current rotation angle when the cable is going to tangle.

10. The virtual reality system of claim 8, wherein an obstacle object of the virtual reality content is generated according to the current rotation angle when the cable is going to tangle.

## Patentansprüche

1. Ein Verfahren, das für ein am Kopf befestigtes Gerät geeignet ist, beinhaltend:
Erfassen (310), durch das am Kopf befestigte Gerät, von Rotationsdaten des am Kopf befestigten Geräts, wobei das am Kopf befestigte Gerät einem Träger einen Virtual-Reality-Inhalt anzeigt;
Erzeugen (320) einer Verwicklungsvorhersage gemäß einem kontinuierlichen Grad der Rotationsdaten durch ein Host-Gerät;
Bestimmen (330) eines Kabelverwicklungsparameters gemäß der Verwicklungsvorhersage durch das Host-Gerät;
Bestimmen eines aktuellen Rotationswinkels des Kabels gemäß dem Kabelverwicklungsparameter, wobei der aktuelle Rotationswinkel des Kabels eine Rotation des am Kopf befestigten Geräts gemäß der Rotationsdaten ist;
Bestimmen (340), ob sich ein Kabel gemäß dem Kabelverwicklungsparameter bald verwickeln wird, durch das Host-Gerät;
wobei sich das Kabel bald verwickeln wird, wenn der Kabelverwicklungsparameter größer als ein Verwicklungsgrenzwert ist;
Anpassen (350) des Virtual-Reality-Inhalts, durch das Host-Gerät, wenn sich das Kabel bald verwickeln wird;
**gekennzeichnet durch** Folgendes:
dynamisches Anpassen des Virtual-Reality-Inhalts gemäß dem aktuellen Rotationswinkel durch das Host-Gerät, indem ein Interessenpunkt in dem Virtual-Reality-Inhalt in eine relativ zu dem aktuellen Rotationswinkel entgegengesetzte Richtung bewegt wird, wenn sich das Kabel bald verwickeln wird; und
Bereitstellen einer Benutzerschnittstelle oder eines Virtual-Reality-Bildes nach dem Anpassen des Virtual-Reality-Inhalts durch das am Kopf befestigte Gerät.

2. Verfahren gemäß Anspruch 1, wobei ein neues Objekt des Virtual-Reality-Inhalts in einer relativ zu dem aktuellen Rotationswinkel entgegengesetzten Richtung erzeugt wird, wenn sich das Kabel bald verwickeln wird.

3. Verfahren gemäß Anspruch 1, wobei ein Hindernisobjekt des Virtual-Reality-Inhalts gemäß dem aktuellen Rotationswinkel erzeugt wird, wenn sich das Kabel bald verwickeln wird.

4. Verfahren gemäß Anspruch 1, wobei der Interessenpunkt in dem Virtual-Reality-Inhalt im Uhrzeigersinn bewegt wird, wenn der aktuelle Rotationswinkel einen Winkel gegen den Uhrzeigersinn darstellt.

5. Verfahren gemäß Anspruch 1, wobei der Interessenpunkt in dem Virtual-Reality-Inhalt gegen den Uhrzeigersinn bewegt wird, wenn der aktuelle Rotationswinkel einen Winkel im Uhrzeigersinn darstellt.

6. Verfahren gemäß Anspruch 1, wobei das Verfahren ferner Folgendes beinhaltet:
Erfassen der Rotationsdaten durch einen Kopfbewegungs-Tracking-Sensor des am Kopf befestigten Geräts während einer Betriebsdauer, um den kontinuierlichen Grad der Rotationsdaten zum Erzeugen des Kabelverwicklungsparameters zu berechnen.

7. Verfahren gemäß Anspruch 1, wobei das Kabel an das am Kopf befestigte Gerät und ein Steuergerät gekoppelt wird.

8. Ein Virtual-Reality-System, beinhaltend:
ein am Kopf befestigtes Gerät, das konfiguriert ist, um Rotationsdaten zu erfassen und die Rotationsdaten durch ein Kabel zu übertragen, wobei das am Kopf befestigte Gerät konfiguriert ist, um einem Träger einen Virtual-Reality-Inhalt anzuzeigen;
ein Host-Gerät ist für Folgendes konfiguriert:
Empfangen der Rotationsdaten durch das Kabel und Erzeugen einer Verwicklungsvorhersage gemäß einem kontinuierlichen Grad der Rotationsdaten, Bestimmen eines Kabelverwicklungsparameters gemäß der Verwicklungsvorhersage, Bestimmen eines aktuellen Rotationswinkels des Kabels gemäß dem Kabelverwicklungsparameter, wobei der aktuelle Rotationswinkel des Kabels eine Rotation des am Kopf befestigten Geräts gemäß der Rotationsdaten ist;
Bestimmen, ob sich das Kabel gemäß dem Kabelverwicklungsparameter bald verwickeln wird, wobei das Host-Gerät ferner konfiguriert ist, um zu bestimmen, dass sich das Kabel bald verwickeln wird, wenn der Kabelverwicklungsparameter größer als ein Verwicklungsgrenzwert ist, und Anpassen des Virtual-Reality-Inhalts, wenn sich das Kabel bald verwickeln wird;
**dadurch gekennzeichnet, dass**
das Host-Gerät den Virtual-Reality-Inhalt gemäß dem aktuellen Rotationswinkel dynamisch anpasst, indem ein Interessenpunkt in dem Virtual-Reality-Inhalt in eine relativ zu dem aktuellen Rotationswinkel entgegengesetzte Richtung bewegt wird, wenn sich das Kabel bald verwickeln wird.

9. Virtual-Reality-System gemäß Anspruch 8, ferner beinhaltend: ein neues Objekt des Virtual-Reality-Inhalts wird in einer relativ zu dem aktuellen Rotationswinkel entgegengesetzten Richtung erzeugt, wenn sich das Kabel bald verwickeln wird.

10. Virtual-Reality-System gemäß Anspruch 8, wobei ein Hindernisobjekt des Virtual-Reality-Inhalts gemäß dem aktuellen Rotationswinkel erzeugt wird, wenn sich das Kabel bald verwickeln wird.

## Revendications

1. Un procédé, approprié pour un dispositif de tête (head mounted device), comprenant :
la détection (310), par le dispositif de tête, d'une donnée rotationnelle du dispositif de tête, le dispositif de tête affichant un contenu de réalité virtuelle pour une personne portant l'article ;
la génération (320), par un dispositif hôte, d'une prédiction d'enchevêtrement selon un degré continu de la donnée rotationnelle ;
la détermination (330), par le dispositif hôte, d'un paramètre d'enchevêtrement de câble selon la prédiction d'enchevêtrement ;
la détermination d'un angle de rotation actuel du câble selon le paramètre d'enchevêtrement de câble, dans lequel l'angle de rotation actuel du câble est une rotation du dispositif de tête selon la donnée rotationnelle ;
la détermination (340), par le dispositif hôte, du fait qu'un câble est sur le point ou non de s'enchevêtrer selon le paramètre d'enchevêtrement de câble ;
dans lequel le câble est sur le point de s'enchevêtrer quand le paramètre d'enchevêtrement de câble est plus élevé qu'un seuil d'enchevêtrement ;
l'ajustement (350), par le dispositif hôte, du contenu de réalité virtuelle quand le câble est sur le point de s'enchevêtrer ;
**caractérisé par**
l'ajustement dynamique, par le dispositif hôte, du contenu de réalité virtuelle selon l'angle de rotation actuel par déplacement d'un point d'intérêt dans le contenu de réalité virtuelle vers une direction opposée par rapport à l'angle de rotation actuel quand le câble est sur le point de s'enchevêtrer ; et
la fourniture, par le dispositif de tête, d'une interface utilisateur ou d'une image de réalité virtuelle après l'ajustement du contenu de réalité virtuelle.

2. Le procédé de la revendication 1, dans lequel un nouvel objet du contenu de réalité virtuelle est généré dans une direction opposée par rapport à l'angle de rotation actuel quand le câble est sur le point de s'enchevêtrer.

3. Le procédé de la revendication 1, dans lequel un objet formant obstacle du contenu de réalité virtuelle est généré selon l'angle de rotation actuel quand le câble est sur le point de s'enchevêtrer.

4. Le procédé de la revendication 1, dans lequel le point d'intérêt dans le contenu de réalité virtuelle est déplacé dans le sens des aiguilles d'une montre quand l'angle de rotation actuel représente un angle dans le sens contraire des aiguilles d'une montre.

5. Le procédé de la revendication 1, dans lequel le point d'intérêt dans le contenu de réalité virtuelle est déplacé dans le sens contraire des aiguilles d'une montre quand l'angle de rotation actuel représente un angle dans le sens des aiguilles d'une montre.

6. Le procédé de la revendication 1, le procédé comprenant en sus :
la détection de la donnée rotationnelle par un détecteur pour suivi de mouvement de tête du dispositif de tête pendant une période de fonctionnement, de façon à calculer le degré continu de la donnée rotationnelle pour la génération du paramètre d'enchevêtrement de câble.

7. Le procédé de la revendication 1, dans lequel le câble est couplé au dispositif de tête et à un dispositif de commande.

8. Un système de réalité virtuelle, comprenant :
un dispositif de tête configuré pour détecter une donnée rotationnelle et transmettre la donnée rotationnelle par un câble, le dispositif de tête étant configuré pour afficher un contenu de réalité virtuelle pour une personne portant l'article ;
un dispositif hôte est configuré pour
recevoir la donnée rotationnelle par le câble et générer une prédiction d'enchevêtrement selon un degré continu de la donnée rotationnelle,
déterminer un paramètre d'enchevêtrement de câble selon la prédiction d'enchevêtrement,
déterminer un angle de rotation actuel du câble selon le paramètre d'enchevêtrement de câble, dans lequel l'angle de rotation actuel du câble est une rotation du dispositif de tête selon la donnée rotationnelle ;
déterminer si le câble est sur le point ou non de s'enchevêtrer selon le paramètre d'enchevêtrement de câble, dans lequel le dispositif hôte est en sus configuré pour déterminer que le câble est sur le point de s'enchevêtrer quand le paramètre d'enchevêtrement de câble est plus élevé qu'un seuil d'enchevêtrement, et ajuster le contenu de réalité virtuelle quand le câble est sur le point de s'enchevêtrer ;
**caractérisé en ce que**
le dispositif hôte ajuste de façon dynamique le contenu de réalité virtuelle selon l'angle de rotation actuel par déplacement d'un point d'intérêt dans le contenu de réalité virtuelle vers une direction opposée par rapport à l'angle de rotation actuel quand le câble est sur le point de s'enchevêtrer.

9. Le système de réalité virtuelle de la revendication 8, comprenant en sus : un nouvel objet du contenu de réalité virtuelle est généré dans une direction opposée par rapport à l'angle de rotation actuel quand le câble est sur le point de s'enchevêtrer.

10. Le système de réalité virtuelle de la revendication 8, dans lequel un objet formant obstacle du contenu de réalité virtuelle est généré selon l'angle de rotation actuel quand le câble est sur le point de s'enchevêtrer.
